# EUROPÄISCHE PATENTSCHRIFT

(11) **EP 2 411 479 B1**
(45) Veröffentlichungstag und Bekanntmachung des Hinweises auf die Patenterteilung: **27.11.2019**
(21) Anmeldenummer: 10706212.7
(22) Anmeldetag: 26.02.2010
(51) Int. Cl.: C09D 123/04, C09D 123/14, C09D 123/18, C09J 123/04, C09J 123/10, C09J 123/14, C09D 133/08, C09D 133/10, C09J 133/08, C09J 133/10

(54) **GRUNDIERUNGSMITTEL FÜR POLYOLEFIN-OBERFLÄCHEN BASIEREND AUF POLYOLEFIN-GRAFT-POLY(METH)ACRYLAT COPOLYMEREN**
POLYOLEFIN POLY(METH)ACRYLATE GRAFT COPOLYMER PRIMER ADHESIVE FOR COATING POLYOLEFIN SURFACE
COPOLYMÈRE GREFFÉ DE ACRYLATE-POLYOLÉFINE COUCHE PRIMAIRE ADHESIVE POUR UNE SURFACE REVÊTUE DE POLYOLÉFINE

(30) Priorität: 26.03.2009 DE 102009001885
(43) Veröffentlichungstag der Anmeldung: 01.02.2012
(73) Patentinhaber: Evonik Degussa GmbH, 45128 Essen (DE)
(72) Erfinder: KOHLSTRUK, Stephan, 48249 Dülmen (DE); BALK, Sven, 60594 Frankfurt (DE); BECKER, Hinnerk Gordon, 45257 Essen (DE); MINDACH, Lutz, 44797 Bochum (DE); ARNOLD, Thomas, 63571 Gelnhausen (DE); BAUMANN, Cornelia, 63589 Linsengericht (DE); SEIPEL, Elke, 63755 Alzenau (DE)
(74) Vertreter: Evonik Patent Association
(86) Internationale Anmeldenummer: PCT/EP2010/052447
(87) Internationale Veröffentlichungsnummer: WO 2010/108754

(56) Entgegenhaltungen:
- WO-A1-2008/072689
- WO-A1-2008/126510
- GB-A- 2 225 332
- US-A1- 2005 124 753

## Beschreibung

### Gebiet der Erfindung

Polyolefine wie Polyethylen, Polypropylen, EPDM oder Poly-α-olefine spielen als Werkstoff z.B. in der Verpackungsindustrie, der Automobilindustrie oder zur Herstellung von Formteilen wie dem Gehäuse eines Mobilfunkgerätes eine große Rolle. Einziger Nachteil dieser leicht zu verarbeitenden, kostengünstigen Materialien sind die Oberflächeneigenschaften. Polyolefine lassen sich nicht direkt lackieren oder verkleben. Dazu wird eine Grundierung oder andersartige Vorbehandlung des Materials benötigt. Die vorliegende Erfindung betrifft ein neuartiges halogen- und säurefreies, gut lösliches Grundierungsbindemittel für Polyolefine, das mit (Meth)acrylaten bepfropfte, amorphe Polyolefine enthält.

### Stand der Technik

Die Oberflächenmodifikation von sehr unpolaren Werkstoffen wie Polyolefinen ist schon sehr lange im Fokus der universitären und industriellen Forschung. Polypropylene oder Polyethylene sind mit polaren Bindemitteln, wie Sie die Grundlage der meisten Klebstoffe oder Lacke bilden, nicht direkt zu beschichten. Die Haftung von Polymeren wie Polyestern, Polyamiden, Polyacrylaten, Polymethacrylaten oder Polyurethanen auf Polyolefinen ist dazu in der Regel zu gering. Polyolefinfolien werden zur Polarisierung der Oberfläche daher zumeist vor der Beschichtung einer hochenergetischen Coronabehandlung unterzogen. Ein solches Verfahren ist jedoch nicht an Formteilen mit Kanten und unregelmäßig geformten Oberflächen anwendbar. Hier gibt es nur die Möglichkeit einer Beflammung, die aufwendig durchzuführen und an besonders unregelmäßig geformten Objekten oft im Kantenbereich zu schlechten Ergebnissen führt. Bessere Ergebnisse sind daher mit einer gut aufzutragenden Polymerlösung, die als Grundierungsmittel verwendet wird, zu erzielen.

Solche Grundierungsmittel basieren häufig auf halogenhaltigen Parafinen oder Polymeren. Siehe dazu zum Beispiel DE 100 11 384, in der Polydichlorbutadiene beschrieben sind. Die Haftung solcher Systeme ist jedoch nicht ausreichend gut, dass vollständig auf eine Vorbehandlung, wie eine Beflammung verzichtet werden könnte.

In WO 2006 124 232 wird ein Beschichtungssystem beschrieben, dass nach der Applikation UV-gehärtet werden muss. Ein solches Beschichtungssystem bedingt nicht nur einen zusätzlichen Arbeitsschritt, sondern zeigt auch weitere Nachteile wie eine verminderte Lagerstabilität.

In WO 2008 031 677 werden Polyolefine mit Harzen auf Keton- und/oder Aldehydharzen als Haftvermittler kombiniert. Dieses System hat gegenüber Einkomponentensystemen jedoch den Nachteil einer eventuell auftretenden Phasenseperation und eines beschränkten Anwendungsspektrums.

In WO 2008 039 595 wird ein wässriges Beschichtungssystem beschrieben, das aus Polyolefin-Polyether Blockcopolymeren mit einem hohen Anteil anionischer Gruppen zusammengesetzt ist. Dem Fachmann ist leicht ersichtlich, dass ein solches System nur mit sehr geringen Feststoffgehalten eingesetzt werden kann und eine gute Filmbildung aus einer wässrigen Lösung mit einem hohen Anteil schwerlöslicher Polyolefinblöcke schwierig ist.

In US 2004 0072 960 sind Grundierungsmittel beschrieben, die durch die Veresterung von carboxylierten Polyolefinen mit multifunktionellen Alkoholen erhalten werden. Bei den Alkoholen handelt es sich um niedermolekulare Verbindungen mit drei oder mehr OH-Gruppen. Dem Fachmann ist leicht ersichtlich, dass ein zu hoher Carboxylierungsgrad zu einer verminderten Haftung auf Polyolefinen führt, ein zu geringer Carboxylierungsgrad andererseits wiederum zu einer zu geringen polaren Funktionalisierung der Oberfläche.

Ein Verfahren zum Bepfropfen von zumeist amorphen Polyolefinen mit Acrylaten und/oder Methacrylaten ist schon lange bekannt und vielfältig durchführbar. Ein Verfahren in Form einer freiradikalischen Lösungspolymerisation ist beispielsweise in DE 101 50 898 beschrieben. Eine Umsetzung über eine Reaktivextrusion findet sich bei Badel et al. (J.of Pol. Sc.; Part A: Pol. Chem.; 45, 22, S. 5215, 2007). Eine Variante dieses Verfahrens mit einer alternativen Initiierung ist in WO 2004 113 399 zu finden. Eine kontrollierte Pfropfreaktion über eine Halogenmodifizierung eines Polyolefins und eine anschließende Atom Transfer Radikal Polymerisation findet sich bei Kaneko et al. (Macromol. Symp., 290, S.9-14, 2007). In keiner dieser Schriften wird eine Beschichtung bzw. Grundierung von Polyolefinoberflächen beschrieben.

In US 6,310,134 werden amorphe Polyolefine mit Säuren oder Anhydriden wie Acryl- oder Methacrylsäure bepfropft. Nachteil solcher Polymere ist die schlechte Löslichkeit in organischen und wässrigen Medien. In dieser Schrift wird das Problem der schlechten Löslichkeit durch sehr geringe Feststoffgehalte unterhalb von 15 gew% gelöst. Zur gleichmäßigen Beschichtung werden somit sehr große Lösungsmittelmengen benötigt oder man erhält eine sehr unregelmäßige Oberfläche. In US 5,523,358 werden Polypropylene analog mit Säuren bepfropft. Hier ist das Pfropfcopolymer während und nach der Reaktion fest und kann nur heterogen oder über eine Extrusionsbeschichtung auf das Substrat aufgetragen werden. Beide Verfahren führen jedoch zu ungleichmäßigen bzw. sehr dicken Grundierungen.

In US 6,262,182 wird das Problem der schlechten Löslichkeit der säuremodifizierten, amorphen Polyolefine durch die Verwendung von hochsiedenden Aromaten als Lösungsmittel gelöst. Bei der Auftragung haben solche Lösungsmittel jedoch große Nachteile bzgl. Emissionen, Toxizität und auch Trocknungstemperaturen bzw. -zeiten.

In GB 2225332 wird eine Grundierungszusammensetzung für die Behandlung von Polyolefin- oder Gummisubstraten offenbart, die mindestens ein Polymer ausgewählt aus (A) einem Propfpolymer einer ungesättigten Dicarbonsäure und einem Ethylen-Vinylacetat Copolymer, (B) einem chlorierten Polypropylen welches gepfropft wurde mit einer ungesättigten Dicarbonsäure, (C) einem chlorierten Polypropylen, (D) einem Pfropfpolymer einer ungesättigten Dicarbonsäure und eines Ethylen-Ethylacrylat Copolymers und (E) eines chlorierten Derivates eines Pfropfpolymers (D). Die Zusammensetzungen können in Form von Flüssigkeiten, die zusätzlich zu den Polymeren ein Lösemittel aufweisen, oder in Pellet- oder Pulverform vorliegen. Polyolefin- und Gummisubstrate die mit diesen Grundierungen versehen sind, können direkt mit konventionellen Beschichtungen und Tinten versehen werden.

In EP 2138547 A1 wird eine Harzzusammensetzung offenbart, die als Bindemittel für ein wässriges Beschichtungsmaterial für Harze auf Polyolefinbasis geeignet ist.

Polyolefine, zumeist amorphe Poly-α-olefine können auch mit Silanreagenzien modifiziert werden. Solche Systeme werden beispielsweise in WO 2007 008 765 bzw. EP 1 900 773 beschrieben. Nachteil solcher Copolymere ist der hohe Olefinanteil und der nur geringe Anteil funktioneller, polarer Gruppen. bei diesen polaren Gruppen handelt es sich zudem um Alkoxsilylgruppen, die nur sehr wenig zur Verbesserung der Löslichkeit beitragen. Daher sind auch diese Polymere nur schlecht löslich und daher schwierig und ungenau zu applizieren.

In EP 1 900 773 werden mit wenigen Silylgruppen bepfropfte Poly-α-Olefine beschrieben. Obwohl diese Produkte eine sehr gute Haftung zeigen, weisen auch diese Polymere einen sehr hohen Olefinanteil auf und sind nur schwer, d.h. in sehr geringen Konzentrationen in organischen Lösungsmitteln löslich.

In EP 1 601 470 und EP 1 508 579 werden ebenfalls mit Silylgruppen funktionalisierte Polyolefine als Grundierungsmittel beschrieben. Nachteil solcher Systeme ist weiterhin, dass die Haftung zur Beschichtung ausschließlich über die Silylgruppen vermittelt wird. Diese weisen jedoch bekanntermaßen eine verminderte Lagerungsstabilität auf, so dass der Anteil der funktionellen Gruppen gering gehalten werden muss.

In DE 195 16 457 wird die Mischung solcher modifizierten Polyolefine mit säuremodifizierten Polyolefinen als Klebstoff beschrieben. Dem Fachmann ist leicht ersichtlich, dass ein solches System nur über sehr schlechte Lagerungseigenschaften verfügt. Auch zeigt ein solcher Klebstoff aufgrund der geringen Zahl funktioneller Gruppen gegenüber einem polaren Polymer verminderte Haftungs- bzw. Anfangshaftungswerte.

In der WO 2007/001694 werden Klebstoffzusammensetzungen beschrieben, die funktionalisierte Polymere (z.B. silangepfropfte oder mit Maleinsäureanhydrid gepfropfte Propylenpolymere) enthalten. Die Basispolymere werden mit Metallocenkatalysatoren hergestellt, und weisen nicht die erforderlichen Materialeigenschaften auf.

In der WO 2007/002177 werden Klebstoffzusammensetzungen auf Basis von statistischen Poly(propylen)-Copolymeren mit einem mindestens 50 gew%igen Propylenanteil und funktionalisierten Polyolefincopolymeren und nicht funktionalisierten Klebharzen beschrieben, wobei die Poly(propylen)-Copolymere eine Schmelzenthalpie von 0,5 bis 70 J/g und einen Anteil isotaktischer Propylentriaden von mindestens 75% aufweisen, und die verwendeten funktionalisierten syndiotaktischen Polymere einen Gehalt an funktionellen Monomereinheiten von mindestens 0,1 % aufweisen. Die beschriebenen Poly(propylen)-Copolymeren werden bevorzugt durch Metallocenkatalyse hergestellt. Die funktionalisierten Polyolefincopolymeren umfassen funktionalisierte Poly(propylen)-Copolymere, syndiotaktische Polypropylencopolymere und sogenannte isotaktisch-ataktische Polypropylen-Pfropfpolymere. Basispolymere mit hohen Anteilen an höheren 1-Olefinen, wie z.B. 1-Butenanteil werden nicht beschrieben. Aufgrund des teilweise sehr hohen Anteils an isotaktischen Polypropyleneinheiten (mit starkem radikalischen Polymerabbau) stellt sich ein schlechtes Verhältnis von Pfropfung/Funktionalisierung zu Kettenspaltung ein. Als funktionelle Monomereinheiten werden insbesondere Maleinsäureanhydrid und Glycidylmethacrylate aber auch diverse andere funktionelle Gruppen wie z.B. Vinylsilane genannt. Die Polyolefine werden ausschließlich mit kleinen Mengen dieser funktioneller Bausteine modifiziert und nicht mit (Meth)acrylatmischungen bepfropft.

### Aufgabe

Aufgabe der vorliegenden Erfindung war es, ein neuartiges Beschichtungsverfahren von Polyolefinoberflächen mit Lack- oder Klebformulierungen, die keine direkte Haftung auf Polyolefinen aufweisen, zu ermöglichen. Insbesondere soll ein neues Grundierungsmittel bereitgestellt werden, welches sich durch eine gegenüber dem Stand der Technik bessere Anwendbarkeit auszeichnet.

Es bestand darüber hinaus die Aufgabe, dass die Polyolefinoberflächen mit einer Lack- oder Klebstoffformulierung, die insbesondere polare Bindemittel enthält, beschichtet werden können.

Eine dritte Aufgabe war es, die Polyolefinoberlfäche, dergestalt zu beschichten, dass die Beschichtung lückenlos und eben ist, und dass die Beschichtung möglichst einfach aufzutragen ist. Dies soll sowohl für Folien als auch für Formteile gelten.

Darüber hinaus bestand die Aufgabe darin, eine Lösung zur Verfügung zu stellen, die weder die Witterungsbeständigkeit des Beschichtungssystems negativ beeinflusst, noch toxikologisch kritisch sein könnte.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch ein zur Grundierung verschiedenartiger Untergründe geeignetes Beschichtungssystem, enthaltend eine filmbildende Dispersion, dadurch gekennzeichnet, dass
ein Polymertyp A, ein Olefinpolymer oder Olefincopolymer, enthalten ist,
ein Polymertyp B, ein (Meth)acrylathomo- oder/und -copolymer ist, enthaltend Standardmethacrylate und/oder Standardacrylate, enthalten ist und
ein Polymertyp AB, ein Pfropfcopolymer aus Polymertyp A und Polymertyp B enthalten ist und
dass die Menge an Polymertyp A zwischen 5 gew% und 60 gew% beträgt,
dass die Menge an Polymertyp B zwischen 5 gew% und 70 gew% beträgt,
dass die Menge an Polymertyp AB zwischen 5 gew% und 70 gew% beträgt, bezogen auf die Gesamtmasse der Polymertypen A, B und AB,
und dass das Masseverhältnis der Summe der Polymertypen A, B und AB zur Masse des Lösungsmittels oder des Lösungsmittelgemischs zwischen 3:1 und 1:3, bevorzugt zwischen 2:1 und 1:2 beträgt.

Überraschend wurde gefunden, dass ein solches Polymergemisch eine gute Haftung auf Polyolefinen aufweist, ohne, dass das Bindemittel Halogene oder freie Säuregruppen aufweist. Halogenierte Bindemittel haben große Nachteile bezüglich Witterungsstabilität oder in toxikologischer Hinsicht.

Überraschend wurde auch gefunden, dass das erfindungsgemäße Beschichtungssystem gut bei relativ niedrigen Temperaturen wie Raumtemperatur in aromatenfreien Lösungsmitteln mit gegenüber dem Stand der Technik deutlich erhöhten Feststoffgehalt löslich ist. Diese Eigenschaften bewirken eine gegenüber dem Stand der Technik deutlich verbesserte Anwendbarkeit.

Die guten Löslichkeitseigenschaften des erfindungsgemäßen Beschichtungssystems bewirken auch, dass die mit dem Beschichtungssystem auf dem Substrat aufgetragene Grundierung und entsprechend die auf der Grundierung aufgetragene zweite Beschichtung lückenlos und eben sind.

Gegenstand der vorliegenden Erfindung ist deshalb ein Grundierungsmittel zur Beschichtung von Polyolefinen, enthaltend eine filmbildende Dispersion oder Lösung, welches dadurch gekennzeichnet ist, dass ein Polymertyp A, ein Polyolefin oder ein Polyolefingemisch, enthalten ist, ein Polymertyp B, ein (Meth)acrylathomo- oder/und -copolymer enthaltend Standardmethacrylate und/oder Standardacrylate, enthalten ist und ein Polymertyp AB, ein Pfropfcopolymer aus Polymertyp A und Polymertyp B, enthalten ist, dass die filmbildende Dispersion oder Lösung halogenfrei und säurefrei ist, wobei säurefrei maximal 70 mmol Säuregruppen / 1 g Polymer bedeutet und halogenfrei maximal 10 mmol Halogenatome / 1 kg Polymer bedeutet, und dass die Menge an Polymertyp A zwischen 5 gew% und 60 gew% beträgt, dass die Menge an Polymertyp B zwischen 5 gew% und 70 gew% beträgt, dass die Menge an Polymertyp AB zwischen 5 gew% und 70 gew% beträgt, bezogen auf die Gesamtmasse der Polymertypen A, B und AB.

Bei den zu beschichtenden Polyolefinen kann es sich zum Beispiel um Poly-1-buten, Polypropylene, Polyethylene, Polyethylen-propylen Copolymere, Poly-α-olefine, EPDM, EPM, Polybutadiene (insbesondere auch SEBS-Blockcopolymere (Styrol-Ethylen / Buten-Styrol-Blockcopolymere)), hydrierte Polybutadiene oder Polyisoprene handeln.

Säurefunktionelle Polymere, zumal in organischem Lösungsmittel gelöst bzw. dispergiert haben besonders hohe Lösungs- bzw. Schmelzviskositäten. Diese Eigenschaften erschweren die Applikation bzw. ermöglichen eine Applikation nur aus Lösungen mit äußerst geringem Feststoffgehalt. Säurefrei umschreibt in diesem Fall ein Bindemittel, das maximal 70 mmol Säuregruppen / 1g Polymer enthält. Halogenfrei umschreibt ein Bindemittel, das maximal 10 mmol Halogenatome / 1 kg Polymer enthält.

Optional kann der Polymertyp B zusätzliche funktionelle Gruppen, bei denen es sich nicht um Halogene oder Säuregruppen, insbesondere aber um Silylgruppen handelt, enthalten. Überraschend wurde gefunden, dass durch die Funktionalisierung mit Silylgruppen die Haftung auf Polyolefinen wie Polypropylen genauso verbessert werden kann, wie die Haftung zu der danach aufgetragenen Sekundärbeschichtung.

Es wurde gefunden, dass dieses zur Grundierung verschiedenartiger Untergründe geeignete Beschichtungssystem sehr gut auf Polyolefinuntergründen haftet und als Grundierung mit verschiedenartigen Lack- oder Klebstoffformulierungen, die nicht auf olefinischen Oberflächen aufgebracht werden können, beschichtet werden kann.

Die Bindemittel dieser Lack- bzw. Klebstoffformulierungen können beispielsweise auf Polyacrylaten, Polymethacrylaten, Polyurethanen, Polyestern, Polyamiden, Polystyrolen oder Mischungen oder Copolymeren dieser Komponenten basieren.

Überraschend wurde auch gefunden, dass das erfindungsgemäße Grundierungsmittel zusätzlich zur Grundierung anderer Oberflächen als Polyolefinen wie von Metallen - z.B. Aluminium, Stahl oder Zink - zur Grundierung von nicht-Polyolefin-Kunststoffen - z.B. PVC, PET, Polystyrol, ABS, Polycarbonat, Polymethacrylat, wie z.B. Plexiglas der Fa. Evonik, Polyamid, wie Polyamid 6 oder Polyethern, wie Polyoxymethylen - bzw. zur Grundierung von anderen Materialien wie Holz, Granit, Beton oder Glas je nach Formulierung geeignet sein kann. Diese grundierten Oberflächen können darauf mit einer auf Polyolefinen basierenden Formulierung als Lack, Kleb- oder Dichtstoff beschichtet werden. Ein Beispiel für eine solche inverse Anwendung ist das Verkleben polarer Substrate wie Plexiglas oder PVC mit Polyolefin-Hotmelts.

### Der Polymertyp A

Die erfindungsgemäß zu verwendenden Olefinpolymerisate und -Copolymerisate, entsprechend A, sind an sich bekannt. Es handelt sich in erster Linie um aus Ethylen-, Propylen-, Butylen- oder /und weiteren α-Olefinen mit 5-20 C-Atomen aufgebaute Polymerisate.

Besonders gut einsetzbar sind weitgehend amorphe Poly-α-Olefine. Als weitgehend amorphe α-Olefine können beispielsweise Homopolymere, wie z.B. amorphes Polypropylen (APP) oder amorphes Poly-1-buten verwendet werden oder vorzugsweise Co- und/oder Terpolymere mit folgender Monomerzusammensetzung:
0 bis 95 gew%, bevorzugt 3 bis 95 gew% eines oder mehrerer α-Olefine mit 4 bis 20 Kohlenstoffatomen,
5 bis 100 gew%, bevorzugt 5 bis 97 gew% Propen und
0 bis 50 gew%, bevorzugt 0 bis 20 gew% Ethen.

Als α-Olefin mit 4 bis 20 Kohlenstoffatomen werden bevorzugt 1-Buten, 1-Penten, 1-Hexen, 1-Octen, 1-Decen, 1-Dodecen, 3-Methyl-1-buten, ein Methylpenten wie z.B. 4-Methyl-1-penten, ein Methylhexen oder ein Methylhepten, allein oder in Mischung eingesetzt.

Die Herstellung derartiger Polymere ist z.B. in der EP 0 023 249 beschrieben. Die erfindungsgemäßen teilkristallinen Polyolefin sind beispielsweise durch Polymerisation von α-Olefin-Monomeren mit einem TiCl₃ • (AlCl₃)ₙ-Mischkatalysator (n = 0,2 bis 0,5) erhältlich, wobei eine Trialkylaluminiumverbindung wie etwa Triethylaluminium, bevorzugt Triisopropylaluminium, besonders bevorzugt Triisobutylaluminium als Cokatalysator eingesetzt wird. Die Aktivität des verwendeten Katalysators liegt üblicher Weise zwischen 5.000 und 20.000 g Polymer/g Katalysator. Das Monomer Ethen wird gasförmig eingesetzt, während die Monomere Propen und 1-Buten sowohl gasförmig als auch flüssig eingesetzt werden können. Höhere Homologe werden flüssig eingesetzt. Werden Propen und/oder 1-Buten flüssig eingesetzt, so muss im verwendeten Reaktor ein den Reaktionsbedingungen entsprechender Druck gehalten werden, welcher eine ausreichende Monomerkonzentration in der flüssigen Phase gewährleistet. Als Molmassenregler kommt gasförmiger Wasserstoff zum Einsatz. Die Polymerisation wird in einem inerten Lösungsmittel durchgeführt, welches z. B. aus der Gruppe der aliphatischen Kohlenwasserstoffe ausgewählt ist. Eine Polymerisation im vorgelegten Monomer ist ebenfalls möglich. Die Polymerisation wird entweder in einem Rührkessel oder in einer Rührkesselkaskade durchgeführt; in einer besonderen Ausführungsform kann auch ein Strömungsrohr bzw. ein rohrförmiger Reaktor mit Zwangsförderung (z. B. eine Schneckenmaschine) verwendet werden. Die Reaktionstemperatur liegt zwischen 30 und 220 °C, bevorzugt zwischen 70 und 150 °C und besonders bevorzugt zwischen 80 und 130 °C. Katalysator und Cokatalysator werden am Ende der Reaktion in geeigneter Weise zersetzt, wobei die zersetzten Katalysatorbestandteile entweder im Polymerisat verbleiben, oder über einen Waschschritt entfernt werden. Die erfindungsgemäßen Polymerisate können dem Stand der Technik entsprechend entweder in Form ihrer Reaktionslösung oder zu einem späteren Zeitpunkt chemisch stabilisiert werden, um sie vor dem schädigenden Einfluss von höheren Temperaturen, Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite, UV-Absorber wie z. B. Hydroxybenzophenone, Hydroxyphenylbenzotriazole usw. und/oder aromatische Amine enthalten, zum Einsatz kommen. Die wirksame Menge an Stabilisatoren liegt dabei im Bereich von 0,1 bis 2 gew%, bezogen auf das Polymer. Um die Fließfähigkeit des Granulats und/oder Pulvers zu gewährleisten, können die im Polymerbereich üblicherweise verwendeten Fließhilfsmittel eingesetzt werden. Diese können sowohl anorganischer als auch organischer Natur sein sowie sowohl nieder- als auch hochmolekulare Komponenten enthalten, wobei in allen Fällen sowohl kristalline als auch amorphe Fließhilfsmittel eingesetzt werden können. Die Fließhilfsmittel können mit den anspruchsgemäßen Polyolefinen im Sinne der thermodynamischen Mischbarkeit sowohl verträglich als auch unverträglich sein. Beispiele sind Polyolefinwachse, die sowohl auf Polyethylen- als auch auf Polypropylenbasis basieren können, und Fischer-Tropsch-Wachse sowie Polyolefinwachse auf 1-Butenbasis.

Diese nicht modifizierten, weitgehend amorphen Poly-α-Olefine besitzen eine Schmelzenthalpie im Bereich von 0 bis 80 J/g, bevorzugt im Bereich von 1 bis 70 J/g, besonders bevorzugt im Bereich von 1 bis 60 J/g.

Die Schmelzenthalpie ist ein Maß für die Kristallinität des Polymers. Die Poly-α-Olefine weisen eine relativ geringe Kristallinität auf, d.h. sie sind weitgehend, jedoch nicht vollständig amorph. Es ist eine gewisse Kristallinität vorhanden, die für die geforderten Materialeigenschaften unabdingbar ist. Die beim Aufschmelzen detektierbaren kristallinen Bereiche erstrecken sich über einen großen Temperaturbereich von 0 °C bis 175 °C und sind von ihrer Intensität her je nach Lage unterschiedlich ausgeprägt. Die Poly-α-Olefine zeichnen sich in ihrer Kristallinität durch das Auftreten sowohl mono- als auch bi- und multimodaler Aufschmelzsignale aus, die zum Teil scharf getrennt sind, zum Teil ineinander übergehen.

Durch die niedrige Kristallinität kann einerseits eine hohe Transparenz, andererseits ein flexibles mechanisches Verhalten erhalten werden. Durch eine höhere Kristallinität kann aber auf der anderen Seite eine besondere Kombination vorteilhafter Materialeigenschaften erzielt werden. Anteile A im erfindungsgemäßen Bindemittel mit relativ hohen Kristallinitäten, wie z.B. Polybuten bzw. Buten-Copolymeren mit hohen Butenanteilen, weisen z.B. sehr gute Zugfestigkeiten auf. Gleichzeitig zeigen sie eine relativ geringe Oberflächenklebrigkeit.

Die Bestimmung der Schmelzenthalpie des kristallinen Anteils erfolgt über Differentialkalorimetrie (DSC) gemäß DIN 53 765 aus der zweiten Aufheizkurve bei einer Heizrate von 10 K/min.

Weiterhin weisen die nicht modifizierten, weitgehend amorphen Poly-α-Olefine einen durch Ring-&-Kugel-Methode bestimmte Erweichungspunkt (bestimmt nach DIN EN 1427) zwischen 75 und 165 °C auf, bevorzugt zwischen 79 und 162°C, besonders bevorzugt zwischen 80 und 158 °C und insbesondere bevorzugt zwischen 82 und 155 °C sowie eine gemäß DIN EN 1426 bestimmte Nadelpenetration von maximal 55*0,1 mm bevorzugt zwischen 3 und 50*0,1 mm, besonders bevorzugt zwischen 5 und 45*0,1 mm und insbesondere bevorzugt zwischen 7 und 42*0,1mm. Die durch Oszillationsrheologie bestimmte komplexe Schmelzviskosität bei 190 °C (bestimmt gemäß ASTM D 4440-01: "Standard Test Method for Plastics: Dynamic Mechanical Properties Melt Rheology" unter Verwendung eines Rheometers MCR 501 der Firma Anton Paar mit einer Platte-Platte-Geometrie mit einem Plattendurchmesser von 50 mm, bei einer maximalen Deformation von 1% und einer Messfrequenz von 1 Hz) beträgt maximal 550.000 mPa*s, bevorzugt maximal 350.000 mPa*s, besonders bevorzugt zwischen 2.500 und 250.000 mPa*s und insbesondere bevorzugt zwischen 5.000 und 200.000 mPa*s.

In einer besonderen, bevorzugten Ausführungsform werden teilkristalline 1-Olefin-Terpolymere auf Basis der Monomere Ethylen, Propylen und 1-Buten eingesetzt, die einen durch ¹³C-NMR-Spektroskopie bestimmten Ethylengehalt von 1 bis 12 gew%, bevorzugt von 2 bis 10 gew%, besonders bevorzugt von 3 bis 9 gew% und insbesondere bevorzugt von 3,5 bis 8 gew% aufweisen, während der ebenfalls durch ¹³C-NMR-Spektroskopie bestimmte Propylengehalt zwischen 50 und 80 gew%, bevorzugt zwischen 55 und 75 gew%, besonders bevorzugt zwischen 57 und 73 gew% und insbesondere bevorzugt zwischen 59 und 71 gew% liegt, während der ebenfalls durch ¹³C-NMR-Spektroskopie bestimmte 1-Butengehalt zwischen 20 und 50 gew%, bevorzugt zwischen 22 und 45 gew%, besonders bevorzugt zwischen 25 und 40 gew% und insbesondere bevorzugt zwischen 27 und 38 gew% liegt, wobei sich die Comonomeranteile von Ethylen, Propylen und 1-Buten auf 100% addieren. Die Nadelpenetration (bestimmt nach DIN EN 1426) der bevorzugten Terpolymere liegt zwischen 5 und 28*0,1mm, bevorzugt zwischen 7 und 26*0,1mm, besonders bevorzugt zwischen 9 und 25*0,1mm und insbesondere bevorzugt zwischen 10 und 23*0,1mm, während der durch Ring-&-Kugel-Methode bestimmte Erweichungspunkt (bestimmt nach DIN EN 1427) zwischen 90 und 125 °C, bevorzugt zwischen 95 und 122°C, besonders bevorzugt zwischen 97 und 120 °C und insbesondere bevorzugt zwischen 99 und 118 °C liegt und die durch Oszillationsrheologie bestimmte komplexe Schmelzviskosität bei 190 °C (bestimmt gemäß ASTM D 4440-01: "Standard Test Method for Plastics: Dynamic Mechanical Properties Melt Rheology" unter Verwendung eines Rheometers MCR 501 der Firma Anton Paar mit einer Platte-Platte-Geometrie mit einem Plattendurchmesser von 50 mm, bei einer maximalen Deformation von 1% und einer Messfrequenz von 1 Hz) maximal 90.000 mPa*s beträgt, bevorzugt 5.000 bis 75.000 mPa*s, besonders bevorzugt 7.500 bis 70.000 und insbesondere bevorzugt zwischen 10.000 und 65.000 mPa*s. Dadurch wird erreicht, dass das für die Pfropfreaktion eingesetzte Polyolefinterpolymer ein optimales Eigenschaftsprofil sowohl hinsichtlich seiner Einsetzbarkeit im Pfropfprozess als auch für seinen späteren Einsatz als gepfropftes Produkt aufweist. Insbesondere weist das bevorzugt eingesetzte Terpolymer eine gute Balance zwischen Kohäsion, Adhäsion und Flexibilität auf.

Die Mengen, die an Polymertyp A in der erfindungsgemäßen Mischung eingesetzt werden, liegen bezogen auf die am Ende der Reaktion polymeren Bestandteile zwischen 10 gew%und 65 gew%, bevorzugt zwischen 20 gew%und 60 gew%und ganz besonders bevorzugt zwischen 25 gew%und 55 gew%.

### Der Polymertyp B

Die im folgenden verwendete Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Monomere, die zur Herstellung des Polymertyps B polymerisiert werden, sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Unter Standardmethacrylaten bzw. Standardacrylaten werden Ester der (Meth)acrylsäure, die industriell Verwendung in der Synthese von Poly(meth)acrylat Formmassen, Klebstoffen, Dichstoffen oder Lackbindemitteln finden. Dies betrifft insbesondere Methyl(meth)acrylat, Ethyl(meth)acrylat, Propyl(meth)acrylat, n-Butyl(meth)acrylat, i-Butyl(meth)acrylat, t-Butyl(meth)acrylat und 2-Ethylhexyl(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinimid, Methylmaleinimid und Diene wie z.B. Divinylbenzol.

Die Mengen, die an Polymertyp B in der erfindungsgemäßen Mischung eingesetzt werden, liegen bezogen auf die am Ende der Reaktion polymeren Bestandteile zwischen 35 gew% und 90 gew%, bevorzugt zwischen 40 gew% und 80 gew% und ganz besonders bevorzugt zwischen 45 gew% und 75 gew%.

Zur Verbesserung der Haftung können die Seitenarme der Pfropfcopolymere optional auch Silylgruppen enthalten.

Als Beispiele für die Silylreste seien -Si(OMe)₃, -SiMe(OMe)₂, -SiMe₂(OMe), - Si(OPh)₃, -SiMe(OPh)₂, -SiMe₂(OPh), -Si(OEt)₃, -SiMe(OEt)₂, -SiMe₂(OEt), - Si(OPr)₃, -SiMe(OPr)₂, -SiMe₂(OPr), -SiEt(OMe)₂, -SiEtMe(OMe), -SiEt₂(OMe), - SiPh(OMe)₂, -SiPhMe(OMe), -SiPh₂(OMe), -SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen.

Eine Möglichkeit, solche Silylgruppen in Polymertyp B einzubauen, ist die Copolymerisation von silylfunktionellen (Meth)acrylaten. Als Beispiele für die (Meth)acrylreste seinen H₂C=CHC(O)O-CH₂-, H₂C=CCH₃C(O)O-CH₂-, H₂C=CHC(O)O-(CH₂)₂-, H₂C=CCH₃C(O)O-(CH₂)₂-, H₂C=CHC(O)O-(CH₂)₃- bzw. H₂C=CCH₃C(O)O-(CH₂)₃- aufgeführt.

Ein kommerziell verfügbares Monomer wäre zum Beispiel Dynasylan® MEMO der Firma Evonik Degussa GmbH. Dabei handelt es sich um 3-Methacryloxypropyltrimethoxysilan.

Eine weitere Möglichkeit, solche Silylgruppen in Polymertyp B einzubauen, ist die Copolymerisation von anderen silylfunktionellen Monomeren, die eine copolymerisierbare olefinische Gruppe, wie z.B. eine Allyl- oder Vinylgruppe, aufweisen.

Ein kommerziell verfügbares Monomer wäre zum Beispiel Dynasylan® VTMO der Firma Evonik Degussa GmbH. Dabei handelt es sich um Vinyltrimethoxysilan.

Eine dritte Möglichkeit, Silylgruppen in Polymertyp B einzubauen, ist die Verwendung von silylfunktionellen Reglern, die beispielsweise eine Thiolgruppe aufweisen.

Ein kommerziell verfügbares Monomer wäre zum Beispiel Dynasylan® MTMO der Firma Evonik Degussa GmbH. Dabei handelt es sich um 3-Mercaptopropyltrimethoxysilan. Weitere verfügbare Silane sind 3-Mercaptopropyltriethoxysilan, 3-Mercaptopropylmethyldimethoxysilan oder Mercaptomethylmethyldiethoxysilan (Fa. ABCR).

Der Anteil silylfunktioneller Monomere an der Monomermischung B liegt zwischen 0 gew% und 20 gew%, bevorzugt zwischen 0 gew% und 10 gew% und besonders bevorzugt zwischen 0 gew% und 5 gew%.

### Der Polymertyp AB

### Herstellung der Pfropfpolymerisate AB

Das Pfropfpolymerisat AB wird in der Regel hergestellt, indem man eine 5 bis 50 gew%ige, vorzugsweise eine 10 bis 25 gew%ige, Lösung des Polymers des Typs A, bevorzugt eines Poly-α-Olefins in einem geeigneten, unter Polymerisationsbedingungen inerten Lösungsmittel, das im Normalfall einen Siedepunkt oberhalb der Verfahrenstemperatur besitzt, herstellt, indem man das Polymer in dem Lösungsmittel bevorzugt oberhalb des Erweichungspunktes des Poly-α-Olefins rührt. Zu dieser möglichst homogenen Lösung wird anschließend bei Reaktionstemperatur ein geeigneter Initiator, vorzugsweise ein peroxidischer Radikal-Initiator, gegeben. Nach einer Initierungszeit von 0 bis 60 min, bevorzugt 0 bis 30 min, insbesondere bevorzugt 1 bis 20 min wird die Monomermischung zur Synthese des Polymertyps B zugegeben bzw. über einen längeren Zeitraum zudosiert. Vorzugsweise finden Perester wie tert.-Butylperoctoat Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,2 gew%, und 3 gew%, bezogen auf das Polymerisat. Parallel zur Pfropfreaktion wird naturgemäß bei diesem Verfahren ein Poly(meth)acrylat des Typs B gebildet.

Für Poly-α-Olefine, die unter den beschriebenen Bedingungen, z.B. aufgrund einer Erweichungstemperatur oberhalb der Siedetemperatur des Lösungsmittels, nicht mit dem Lösungsmittel mischbar sind, können alternativ Emulgatoren zugesetzt werden. Die Pfropfreaktion wird in diesem Fall analog in einer organischen Dispersion durchgeführt.

Die Polymerisationszeit liegt gewöhnlich zwischen 4 und 8 Stunden. Die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C

In einer alternativen Methode wird mit Hilfe eines geeigneten Emulgators eine Dispersion aus der Komponente A herstellt und auf diese Monomere, die zur Komponente B führen, unter den dafür geeigneten Reaktionsbedingungen analog der ersten Methode aufgepfropft. Der Emulgator kann einen dem System AB ähnlichen Aufbau besitzen. Die Verfahren zur Herstellung geeigneter Emulgatoren vom Typ AB sind an sich bekannt. So kann z. B. nach der Methode der Übertragungspfropfung vorgegangen werden: (Vgl. auch Houben-Weyl, Methoden der Org. Chemie, Bd. 1411, S. 114, H.A.J. Battaerd, G.W. Tregear, Polymer Reviews, Vol. 16, Interscience (1967)).

Das Verfahren kann in beliebigen Lösungsmitteln wie H₂O; Acetaten, vorzugsweise Butylacetat, Ethylacetat, Propylacetat; Ketonen, vorzugsweise Ethylmethylketon, Aceton; Ethern; Aliphaten, vorzugsweise Pentan, Hexan; Biodiesel; aber auch Weichmachern wie niedrigmolekulare Polypropylenglycolen oder Phthalaten durchgeführt werden. Bevorzugt wird das erfindungsgemäße Bindemittel in aromatenfreien Lösungsmittelsystemen hergestellt. Aromaten sind aus toxikologischer Sicht bedenklich und sollten auch in industriellen Anwendungen nach Möglichkeit vermieden werden. Überraschend wurde gefunden, dass die erfindungsgemäße Herstellung von Pfropfcopolymeren besonders gut in Acetaten wie Butylacetat durchgeführt werden kann. Einschränkend auf die Wahl des Lösungsmittels ist oft der Erweichungspunkt des Poly-α-Olefins. Die Siedetemperatur des gewählten Lösungsmittels sollte idealerweise oberhalb dieses Bereiches liegen. Alternativ kann die Pfropfreaktion unter Druck durchgeführt werden.

Auch Gemische aus den vorstehend beschriebenen Lösungsmitteln kommen für das Trägersystem infrage. Das Masseverhältnis der Summe der Polymertypen A, B und AB zur Masse des Lösungsmittels oder des Lösungsmittelgemischs kann zwischen 3:1 und 1:3, bevorzugt zwischen 2:1 und 1:2 betragen. Bevorzugt enthält das Lösungsmittelgemisch keine Aromaten.

Neben der Lösungspolymerisation können die erfindungsgemäßen Bindemittel auch mittels Emulsions-, Miniemulsions-, Mikroemulsions-, Suspension- oder Substanzpolymerisation hergestellt werden.

Eine alternative Methode ist die Substanzpolymerisation, insbesondere die kontinuierliche Substanzpolymerisation. Diese kann in Form einer Reaktivextrusion oder in einem Polymerisationskneter durchgeführt werden. Vorteil eines solchen Verfahrens ist, dass man das Produkt frei von Lösungsmitteln erhält und in dieser Form direkt in Schmelzanwendungen wie zum Beispiel Schmelzklebstoffen oder reaktiven Schmelzklebstoffen einsetzen kann. Besonders geeignet ist ein Lösungsmittel freies System auch für so genannte High Solid Lacke, die auf einem möglichst hohen Feststoffgehalt basieren. Durch Formulierung mit einem erfindungsgemäßen Produkt als Substanz, wird eine solche Lackformulierung nicht weiter verdünnt. Bei mittels Lösungspolymerisation hergestellten Polymeren dagegen muss vor einer dieser Anwendungen erst in einem zusätzlichen Verfahrensschritt das Lösungsmittel entfernt werden. Bei Emulsions- bzw. Suspensionspolymerisaten muss erst das Restwasser durch Trocknen entfernt werden. Dies ist insbesondere bei reaktiven, eventuell feuchtigkeitsvernetzenden Systemen wichtig.

Im Fall eines Pfropfprozesses in Lösung liegt die Reaktionstemperatur des Pfropfprozesses bei 30 bis 200 °C, bevorzugt bei 40 bis 190 °C, besonders bevorzugt bei 50 bis 180 °C und insbesondere bevorzugt bei 55 bis 140 °C. Die Lösungspfropfung erfolgt entweder in diskontinuierlicher oder in kontinuierlicher Weise. Im Fall einer diskontinuierlichen Reaktionsführung wird zunächst das feste Polymer (z.B. als Granulat, Pulver usw.) im verwendeten Lösungsmittel gelöst. Alternativ dazu wird direkt eine konditionierte Polymerisationslösung aus dem Herstellverfahren des Basispolymers verwendet und auf Reaktionstemperatur gebracht. Es folgt die Zugabe des Monomers/der Monomeren und der/des Radikalstarter(s). In einer besonders bevorzugten Ausführungsform werden Lösungsmittel Basispolymere(e) und Monomer(e) vorgelegt und auf Reaktionstemperatur gebracht, während der/die Radikalstarter über einen definierten Zeitraum kontinuierlich zudosiert wird/werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt. In einer weiteren besonders bevorzugten Ausführungsform werden Lösungsmittel und Basispolymer(e) vorgelegt und auf Reaktionstemperatur gebracht, während Monomer(e) und Radikalstarter - gemeinsam (z.B. in Form einer Mischung) oder voneinander getrennt- über einen definierten Zeitraum kontinuierlich zudosiert werden. Dies hat den Vorteil, dass sowohl die stationäre Radikalkonzentration als auch die Monomerkonzentration am Reaktionsort niedrig sind, was sowohl die Kettenspaltung als auch die Bildung von Homopolymeren zurückdrängt. Dies ist insbesondere bei der Verwendung von Monomeren wichtig, die bei Reaktionstemperatur stark zur thermisch initiierten (Homo)polymerisation neigen. Ganz besonders bevorzugt wird im Anschluss an die unterschiedlichen definierten Zudosierungszeiträume eine weitere Menge an Radikalstarter(n) zudosiert, um den Gehalt an Restmonomeren in der Reaktionslösung zu minimieren. Als Reaktor wird bevorzugt ein Rührkessel verwendet, die Verwendung alternativer Reaktionsbehälter wie z.B. diskontinuierlicher Knetreaktoren ist ebenfalls möglich, und insbesondere bei niedrigen Reaktionstemperaturen und/oder hohen Polymerkonzentrationen bevorzugt.

Im Fall einer kontinuierlichen Reaktionsführung wird zunächst in einem oder mehreren Vorlagebehältern (z.B. Rührkesseln) das feste Polymer in mindestens einem Lösungsmittel gelöst und anschließend kontinuierlich in den/die Reaktionsbehälter dosiert. In einer alternativen, ebenfalls besonders bevorzugten Ausführungsform, wird direkt eine konditionierte Polymerlösung aus einem Herstellprozess des Basispolymers verwendet. In einer weiteren ebenfalls besonders bevorzugten Ausführungsform wird das feste Polymer (z.B. in Form von Pulver, Granulat, Pellets usw.) zusammen mit mindestens einem Lösungsmittel kontinuierlich in eine (ein- oder mehrwellige) Schneckenmaschine oder einen Kontikneter dosiert, unter Einwirkung von Temperatur und/oder Scherung gelöst, und anschließend kontinuierlich in den/die Reaktionsbehälter dosiert. Als Reaktionsbehälter bzw. Reaktoren für die Durchführung der kontinuierlichen Pfropfreaktion in Lösung kommen kontinuierliche Rührkessel, Rührkesselkaskaden, Strömungsrohre, Strömungsrohre mit Zwangsförderung (z.B. Schneckenmaschinen), Reaktionskneter sowie deren beliebige Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden können. Besonders bevorzugt werden zwei- und/oder mehrwellige Extruder eingesetzt. Insbesondere bevorzugt zur kontinuierlichen Herstellung der erfindungsgemäßen modifizierten Polymere in Lösung ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt. Alternativ bevorzugt handelt es sich um ein Schmelzeverfahren, wobei mindestens ein Radikalstarter direkt in die Schmelze dosiert wird. Insbesondere liegt bei dieser Verfahrensvariante die Temperatur der Polymermasse zum Zeitpunkt der Zudosierung mindestens eines Radikalstarters oberhalb der SADT (Self accelerating decompositon temperature = Temperatur oberhalb der eine selbstbeschleunigende Zersetzung einsetzen kann) mindestens eines der zudosierten Radikalstarter.

Die Reaktionstemperatur des Pfropfprozesses in der Schmelze liegt bei 160-250 °C, bevorzugt bei 165-240 °C, besonders bevorzugt bei 168 bis 235 °C und insbesondere bevorzugt bei 170 bis 230 °C.

Die Schmelzepfropfung erfolgt entweder in diskontinuierlicher oder in kontinuierlicher Fahrweise. Im Fall einer diskontinuierlichen Reaktionsführung wird das feste Polymer (z.B. als Granulat, Pulver, Pellets usw.) zunächst aufgeschmolzen und gegebenenfalls homogenisiert. Alternativ wird direkt eine konditionierte Polymerschmelze aus einem Polymerisationsprozess verwendet und auf Reaktionstemperatur gebracht. Es folgt die Zugabe von Monomere(en) und Radikalstarter(n).

In einer besonderen Ausführungsform werden Monomer(e) und Polymerschmelze homogen durchmischt und auf Reaktionstemperatur gebracht, während der/die Radikalstarter über einen definierten Zeitraum kontinuierlich zudosiert werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt.

In einer weiteren besonders bevorzugten Ausführungsform wird die Polymerschmelze vorgelegt und homogenisiert, während Monomer(e) und Radikalstarter gemeinsam (z.B. in Form einer Mischung) oder getrennt über einen definierten Zeitraum kontinuierlich zudosiert werden. Dies hat den Vorteil, dass sowohl die stationäre Radikalkonzentration, als auch die Monomerkonzentration am Reaktionsort niedrig bleibt, was sowohl die Kettenspaltung als auch die Bildung von Homopolymer zurückdrängt. Letzteres ist besonders bei der Verwendung von Monomeren wichtig, die bei der vorliegenden Reaktionstemperatur zur thermischen (Homo)polymerisation neigen. Als Reaktor wird bevorzugt ein Rührkessel mit wandgängigem Rühraggregat oder ein Reaktionskneter verwendet.

Im Fall einer kontinuierlichen Reaktionsführung wird zunächst in einem oder mehreren Vorlagebehältern (z.B. Rührkesseln) das feste Polymer aufgeschmolzen und anschließend kontinuierlich in den/die Reaktionsbehälter dosiert. In einer alternativen, ebenfalls besonders bevorzugten Ausführungsform, wird direkt eine konditionierte Polymerschmelze aus einem Polymerisationsprozess verwendet. In einer weiteren ebenfalls besonders bevorzugten Ausführungsform wird das feste Polymer (z.B. in Form von Pulver, Granulat, Pellets usw.) kontinuierlich in eine (ein- oder mehrwellige) Schneckenmaschine oder einen Kontikneter dosiert, unter Einwirkung von Temperatur und/oder Scherung aufgeschmolzen, und anschließend kontinuierlich in den/die Reaktionsbehälter dosiert. Als Reaktionsbehälter bzw. Reaktoren für die Durchführung der kontinuierlichen Pfropfreaktion in der Schmelze kommen kontinuierliche Rührkessel, Rührkesselkaskaden, Strömungsrohre, Strömungsrohre mit Zwangsförderung (z.B. Schneckenmaschinen), Reaktionskneter sowie deren beiliege Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden. Besonders bevorzugt werden zwei- und/oder mehrwellige Extruder eingesetzt. Insbesondere bevorzugt zur kontinuierlichen Herstellung der erfindungsgemäßen modifizierten Polymere in der Schmelze ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt.

Gegebenenfalls können zur Einstellung des gewünschten Molekulargewichts der Segmente B noch Regler verwendet werden. Als Regler eignen sich z. B. Schwefelregler, insbesondere mercaptogruppenhaltige Regler, z. B. Dodecylmercaptan. Die Konzentrationen an Reglern liegen im Allgemeinen bei 0.1 gew%, bis 2,0 gew%, bezogen auf das Gesamtpolymerisat.

Eine weitere Methode zur Herstellung der Pfropfpolymerisate AB stellt die Hydroperoxidation eines Poly-α-Olefins als ersten Schritt dar. Die auf diese Weise gebildeten, kettenständigen Hydroperoxydgruppen können in einer folgenden Stufe die Pfropfpolymerisation der Vinylmonomeren initiieren. (Vgl. H.A.J. Battaerd, G.W. Tregear, Polymer Reviews loc. cit.).

Die Mengen, die an Polymertyp AB in der erfindungsgemäßen Mischung eingesetzt werden, liegen bezogen auf die am Ende der Reaktion polymeren Bestandteile zwischen 5 gew% und 70 gew%, bevorzugt zwischen 20 gew% und 60 gew% und ganz besonders bevorzugt zwischen 25 gew% und 50 gew%.

Die erfindungsgemäßen Grundierungsmittel können zur Grundierung verschiedener Untergründe angewendet werden. Bevorzugt wird das erfindungsgemäße Bindemittel zur Grundierung von Polyolefinoberflächen, insbesondere bevorzugt zur Grundierung von Polypropylenoberflächen eingesetzt. Die Grundierung wiederum kann mit einer zweiten Formulierung oder Substanz beschichtet werden. Dabei kann es sich beispielsweise um einen Lack, einen Klebstoff oder einen Dichtstoff handeln. Bei der zweiten Schicht kann es sich darüber hinaus um einen Haftvermittler handeln, der wiederum beschichtet wird. Bei den beschichteten Oberflächen kann es sich zum Beispiel um die Oberflächen von Folien, Granulaten, spritzgegossenen oder auf eine andere Art hergestellten Formteilen, Verbundmaterialien oder Laminaten handeln. Im weiteren werden alle diese Darreichungsformen unter dem Begriff "Werkstück" zusammengefasst.

Die auf diese Weise grundierten und anschließend beschichteten Werkstücke können Verwendung finden in der Verpackungsindustrie, z.B. für Lebensmittel oder pharmazeutische Produkte, dem Automobilbau, dem Schiffsbau, der Elektronikindustrie, der Bauindustrie, dem Möbelbau, dem Maschinenbau oder der Herstellung von Spielwaren.

Die Beschichtung mit dem Grundierungsmittel kann zum Beispiel analog zum Coil Coating über Walzen erfolgen. Die Grundierung kann auch auf die Oberfläche gesprüht oder lackiert werden. Ferner können auch Methoden wie das Spin Coating oder das Tauchlackieren zur Anwendung kommen. Ferner ist es ebenfalls möglich, das Lösungsmittel vor dem Auftragen zu entfernen und die Substratoberfläche mittels Extrusionsbeschichtung oder Coextrusion zu grundieren.

### Beispiele

### Messung der dynamischen Viskosität η

Die Messung der dynamischen Viskosität η erfolgt gemäß DIN EN ISO 53018.

### Messung des Feststoffgehalts

Schnelles Einwiegen von 0,3 - 0,5 g Polymerlösung, auf 0,1 mg genau, in eine tarierte Aluminiumschale und anschließende Zugabe von 5 mL Aceton als Schleppmittel. Anschließend wird das Lösungsmittel zunächst 60 min bei Raumtemperatur und anschließend weitere 60 min bei 105 °C abgedampft. Die Probe wird in einem Exsikkator abgekühlt, gewogen und das Differenzgewicht ermittelt. Die Messung wird für jede Probe dreimal durchgeführt. Bei Abweichungen größer 0,2 Gew-% werden zusätzliche Messungen durchgeführt.

### Testfolie

Also Testfolie zur Beurteilung der PP-Haftung wurde eine PP-Folie extrudiert aus Granulat JE6100 der Fa. Shell mit einer Dicke von 200 µm verwendet.

### Bestimmung der PP-Haftung von Lacken

Die PP-Haftung eines Bindemittels auf verschiedenen Substratoberflächen wurde mittels Gitterschnitt-Prüfung inklusive Klebeband-Abriss (im weiteren Tesaabrisstest) DIN EN ISO 2409 untersucht. Dazu wird die Probe unverändert, mit dem nach der Synthese eingestellten Feststoffgehalt mit einer Nassschichtdicke von 60 µm auf das Substrat mittels Spiralrakel aufgetragen und über Nacht bei Raumtemperatur getrocknet. Die Bewertung des Ergebnisses erfolgt mit Werten zwischen 0 (besonders gutes Haftungsbild) bis 5 (keine Haftung). In den Tabellen sind zwei Werte angegeben: bei dem ersten handelt es sich um die optische Beurteilung nach dem Tesaabrisstest und bei dem zweiten um die optische Beurteilung nach der Schnittdurchführung.

### a) Beispiele für die erfindungsgemäß eingesetzten Polyolefine (Polymertyp A)

Unter Verwendung eines Mischkontaktes eines kristallinen Titantrichlorides in Form eines Aluminium-reduzierten TiCl₃ (TiCl₃*0,33 AlCl₃) und Aluminiumtriisobutyl (im Gewichtsverhätnis 1:4) werden Ethen, Propen und 1-Buten in n-Butan bei 95 °C in einem Laborautoklaven polymerisiert, wobei Wasserstoff als Molmassenregler eingesetzt wird. Die Monomere Ethen und Propen werden während der Reaktionszeit von 3 h kontinuierlich zudosiert, das Monomer 1-Buten wird vorgelegt. Nach 3h wird die Reaktionsmischung mit Isopropanol versetzt, wodurch die Reaktion abgestoppt wird. Sodann wird eine acetonischen Lösung eines Stabilisators (z.B. Irganox) zugegeben. In einem Verdampfer werden nicht umgesetzte Monomere sowie das Lösungsmittel n-Butan verdampft. Die Schmelze des weitgehend amorphen Polyolefins wird bei einer Temperatur von ca. 190 °C abgelassen.

Die Polymere weisen folgende Eigenschaften auf

| Versuchs-Nr. | Polymerzusammensetzung (¹³C-NMR) | | | T_{Erw.} [°C] | PEN [0,1mm] | η^{*}_{190°C} [mPa*s] |
|---|---|---|---|---|---|---|
| | Ethen | Propen | 1-Buten | | | |
| V1 | 0 | 2 | 98 | 118 | 5 | 6.750 |
| 1 | 2 | 24 | 74 | 85 | 13 | 24.300 |
| 2 | 0 | 61 | 39 | 132 | 9 | 3.100 |
| 3 | 3,5 | 84,5 | 12 | 106 | 14 | 48.600 |
| 4 | 5,1 | 61,4 | 35 | 117 | 15 | 223.000 |
| 5 | 4 | 67,3 | 28,7 | 112 | 10 | 41.800 |
| | | | | | | |

Vergleichsbeispiel V1 ist aufgrund des sehr geringen Propylengehalts nicht erfindungsgemäß.

### b) Beispiele für die erfindungsgemäß synthetisierten Pfropfcopolymere (Polymertyp AB)

### Beispiel 6

In einem Doppelmantelgefäß mit angeschlossenem Thermostaten, Rückflusskühler, Blattrührer und Innenthermometer werden 240 g n-Butylacetat und 100 g Polyolefin des Typs 1 vorgelegt. Unter Rühren wird das Polyolefin bei 100 °C innerhalb von einer Stunde vollständig aufgelöst und anschließend mit 0,78 g t-Butyl-per-2-ethylhexanoat versetzt. Darauf wird mittels einer Dosierpumpe eine Mischung aus 75 g Methylmethacrylat, 75 g n-Butylacrylat und 2,3 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 180 g n-Butylacetat verdünnt. Nach weiteren 60 min Rühren zur Homogenisierung wird die Dispersion auf Raumtemperatur abgekühlt.

### Beispiel 7

In einem Doppelmantelgefäß mit angeschlossenem Thermostaten, Rückflusskühler, Blattrührer und Innenthermometer werden 316 g n-Butylacetat und 120 g Polyolefin des Typs 3 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 140 g Methylmethacrylat, 140 g n-Butylacrylat und 4,25 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Beispiel 8

In einem Doppelmantelgefäß mit angeschlossenem Thermostaten, Rückflusskühler, Blattrührer und Innenthermometer werden 327 g n-Butylacetat und 120 g Polyolefin des Typs 5 vorgelegt. Unter Rühren wird das Polyolefin bei 100 °C innerhalb von einer Stunde vollständig aufgelöst und anschließend mit 2,91 g t-Butyl-per-2-ethylhexanoat versetzt. Darauf wird mittels einer Dosierpumpe eine Mischung aus 280 g n-Butylacrylat und 8,51 g t-Butyl-per-2-ethylhexanoat über einen Zeitraum von 90 min zudosiert.

Nach weiteren 150 min Reaktionszeit wird die Polymerlösung auf 90 °C abgekühlt und zur Verringerung der Lösungsviskosität mit 243 g n-Butylacetat verdünnt. Nach weiteren 60 min Rühren zur Homogenisierung wird die Dispersion auf Raumtemperatur abgekühlt.

### Beispiel 9

In einem Doppelmantelgefäß mit angeschlossenem Thermostaten, Rückflusskühler, Blattrührer und Innenthermometer werden 316 g n-Butylacetat und 120 g Polyolefin des Typs 5 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 136 g Methylmethacrylat, 136 g n-Butylacrylat, 8 g 3-Methacryloxypropyltrimethoxysilan und 4,25 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Beispiel 10

In einem Doppelmantelgefäß mit angeschlossenem Thermostaten, Rückflusskühler, Blattrührer und Innenthermometer werden 316 g n-Butylacetat und 120 g Polyolefin des Typs 5 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 272 g n-Butylacrylat, 8 g 3-Methacryloxypropyltrimethoxysilan und 4,25 g t-Butyl-per-2-ethylhexanoat über einen Zeitraum von 90 min zudosiert. Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Beispiel 11

In einem Doppelmantelgefäß mit angeschlossenem Thermostaten, Rückflusskühler, Blattrührer und Innenthermometer werden 316 g n-Butylacetat und 120 g Polyolefin des Typs 5 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 272 g n-Butylmethacrylat, 8 g 3-Methacryloxypropyltrimethoxysilan und 4,25 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

**Ergebnisse der Beispielsynthese**

| Versuchs-Nr. | η_{190°C} | Feststoffgehalt | Aussehen | Polyolefin / Poly(meth)acrylat |
|---|---|---|---|---|
| | [mPa*s] | Gew-% | | |
| 6 | 3500 | 36,2 | weiß, dispers | 40/60 |
| 7 | 1600 | 40,2 | weiß, dispers | 30/70 |
| 8 | 360 | 40,4 | weiß, dispers | 30/70 |
| 9 | 2300 | 40,6 | weiß, dispers | 30/70 |
| 10 | 180 | 40,6 | weiß, dispers | 30/70 |
| 11 | 6800 | 39,8 | weiß, dispers | 30/70 |

Anhand dieser Ergebnisse kann gezeigt werden, dass überraschend niedrige Viskositäten gefunden wurden. Auch mit einem Feststoffgehalt von ca. 40 Gew% und einem Polyolefinanteil im Festkörper von 30 Gew-% bzw. 40 Gew-% haben die Lösungen bzw. Dispersionen eine gute Verarbeitbarkeit und weisen sämtlich keine oder nur geringe Phasentrennungen auf. Einzig Beispiel 8 zeigte nach einer Lagerung von sieben Tagen eine geringe Phasentrennung in eine klare und eine weiß-disperse Flüssigphase. Die Probe lies sich durch Schütteln oder Rühren jedoch leicht wieder redispergieren. Damit weisen die erfindungsgemäßen Polymerdispersionen eine überraschend gute Lagerstabilität auf.

**Optische Beurteilung der Filme nach Tesaabrisstest und Gitterschnittprüfung**

| | Optische Beurteilung | |
|---|---|---|
| Beispiel | Tesaabrisstest | Gitterschnitt |
| 6 | 1 | 3 |
| 7 | 1 | 3 |
| 9 | 0 | 2 |

Durch diese Versuche konnte gezeigt werden, dass die erfindungsgemäßen Bindemittel eine ausreichende Haftung auf PP-Folien zeigen und als Primer für weitere Beschichtungen eingesetzt werden können. Eine Beschichtung der erfindungsgemäßen Primerschichten mit einer zusätzlichen Lackschicht zum Beispiel auf Methacrylatbasis wie DEGALAN LP 64/12 der Fa. Evonik sollte erwartungsgemäß zu keiner Veränderung der Ergebnisse führen.

## Patentansprüche

1. Grundierungsmittel zur Beschichtung von Polyolefinen, enthaltend eine filmbildende Dispersion oder Lösung, **dadurch gekennzeichnet, dass**
ein Polymertyp A, ein Polyolefin oder ein Polyolefingemisch, enthalten ist,
ein Polymertyp B, ein (Meth)acrylathomo- oder/und -copolymer enthaltend Standardmethacrylate und/oder Standardacrylate, enthalten ist und
ein Polymertyp AB, ein Pfropfcopolymer aus Polymertyp A und Polymertyp B, enthalten ist,
dass die filmbildende Dispersion oder Lösung halogenfrei und
säurefrei ist, wobei säurefrei maximal 70 mmol Säuregruppen / 1 g Polymer bedeutet und halogenfrei maximal 10 mmol Halogenatome / 1 kg Polymer bedeutet, und
dass die Menge an Polymertyp A zwischen 5 gew% und 60 gew% beträgt,
dass die Menge an Polymertyp B zwischen 5 gew% und 70 gew% beträgt, dass die Menge an Polymertyp AB zwischen 5 gew% und 70 gew% beträgt, bezogen auf die Gesamtmasse der Polymertypen A, B und AB.

2. Grundierungsmittel zur Beschichtung von Polyolefinen gemäß Anspruch 1 **dadurch gekennzeichnet, dass** Polymertyp B und Polymertyp AB Silylgruppen aufweisen.

3. Grundierungsmittel zur Beschichtung von Polyolefinen gemäß Anspruch 1 oder Anspruch 2 **dadurch gekennzeichnet, dass** das Masseverhältnis der Summe der Polymertypen A, B und AB zur Masse des Lösungsmittels oder des Lösungsmittelgemischs zwischen 3:1 und 1:3, bevorzugt zwischen 2:1 und 1:2 beträgt.

4. Grundierungsmittel zur Beschichtung von Polyolefinen gemäß Anspruch 3 **dadurch gekennzeichnet, dass** das Lösungsmittel bzw. das Lösungsmittelgemisch keine Aromaten enthält.

5. Grundierungsmittel zur Beschichtung von Polyolefinen gemäß einem der Ansprüche 1 bis 4 **dadurch gekennzeichnet, dass** es sich bei Polymertyp A um ein ataktisches Polypropylen, ataktisches Poly-1-buten und/oder Co- und/oder Terpolymer der Monomerzusammensetzung
0 bis 95 gew%, bevorzugt 3 bis 95 gew% eines oder mehrerer α-Olefine mit 4 bis 20 Kohlenstoffatomen,
5 bis 100 gew%, bevorzugt 5 bis 97 gew% Propen und
0 bis 50 gew%, bevorzugt 0 bis 20 gew% Ethen
handelt.

6. Grundierungsmittel zur Beschichtung von Polyolefinen gemäß Anspruch 5 **dadurch gekennzeichnet, dass** als α-Olefine mit 4 bis 20 Kohlenstoffatomen 1-Buten, 1-Penten, 1-Hexen, 1-Octen, 1-Decen, 1-Dodecen, 3-Methyl-1-buten, ein Methylpenten, bevorzugt 4-Methyl-1-penten, ein Methylhexen oder ein Methylhepten allein oder in Mischung eingesetzt werden.

7. Grundierungsmittel zur Beschichtung von Polyolefinen gemäß einem der vorhergehenden Ansprüche **dadurch gekennzeichnet, dass** es sich bei dem Polymertyp AB um ein Pfropfcopolymer mit einer Polyolefinhauptkette und Poly(meth)acrylatseitenketten handelt.

8. Grundierungsmittel zur Beschichtung von Polyolefinen gemäß einem der vorhergehenden Ansprüche **dadurch gekennzeichnet, dass** zu einer Mischung eines Polymers des Typs A und eines Initiators in einem Lösungsmittel Monomere, die zur Komponente B führen, dosiert und polymerisiert werden.

9. Verfahren zur Grundierung von Polyolefinuntergründen, **dadurch gekennzeichnet, dass** ein Grundierungsmittel nach einem der vorstehenden Ansprüche als Lösung aufgetragen wird und anschließend die Grundierung getrocknet wird.

10. Verfahren gemäß Anspruch 9 **dadurch gekennzeichnet, dass** auf die Grundierungsschicht eine zweite Schicht aufgetragen wird.

11. Verfahren gemäß Anspruch 10 **dadurch gekennzeichnet, dass** es sich bei der zweiten Schicht um einen Lack, einen Klebstoff oder einen Dichtstoff handelt.

12. Folie, Formteil, Rohr oder Kabelummantelung **dadurch gekennzeichnet, dass** sie nach einem der Ansprüche 9 bis 11 beschichtet wurde.

13. Verfahren zur Grundierung von polaren Untergründen, **dadurch gekennzeichnet, dass** ein Grundierungsmittel nach einem der Ansprüche 1 bis 8 als Lösung aufgetragen wird und anschließend die Grundierung getrocknet wird, und dass auf die Grundierungsschicht eine zweite Schicht, die überwiegend aus Polyolefinen besteht, aufgetragen wird.

14. Verfahren gemäß Anspruch 13 **dadurch gekennzeichnet, dass** es sich bei der zweiten Schicht um einen Klebstoff oder einen Dichtstoff handelt.

15. Folie, Formteil, Rohr oder Kabelummantelung **dadurch gekennzeichnet, dass** sie nach einem der Ansprüche 13 bis 14 beschichtet wurde.

## Claims

1. Primer for coating polyolefins, comprising a film-forming dispersion or solution, **characterized in that**
a polymer type A, a polyolefin or a polyolefin mixture, is present,
a polymer type B, a (meth)acrylate homo- or/and copolymer comprising standard methacrylates and/or standard acrylates, is present, and
a polymer type AB, a graft copolymer made of polymer type A and polymer type B, is present,
and that the film-forming dispersion or solution is halogen-free and
acid-free, where acid-free means at most 70mmol of acid groups / 1g of polymer and halogen-free means at most 10mmol of halogen atoms / 1kg of polymer, and **in that** the amount of polymer type A is from 5 to 60% by weight, the amount of polymer type B is from 5 to 70% by weight, and the amount of polymer type AB is from 5 to 70% by weight, based on the entirety of polymer types A, B and AB.

2. Primer for coating polyolefins according to Claim 1, **characterized in that** polymer type B and polymer type AB have silyl groups.

3. Primer for coating polyolefins according to Claim 1 or Claim 2, **characterized in that** the ratio by mass of the entirety of polymer types A, B, and AB to the mass of the solvent or of the solvent mixture is from 3:1 to 1:3, preferably from 2:1 to 1:2.

4. Primer for coating polyolefins according to Claim 3, **characterized in that** the solvent or the solvent mixture comprises no aromatics.

5. Primer for coating polyolefins, according to any of Claims 1 to 4, **characterized in that** polymer type A involves an atactic polypropylene, atactic poly-1-butene, and/or co- and/or terpolymer of the following monomer constitution:
from 0 to 95% by weight, preferably from 3 to 95% by weight, of one or more α-olefins having from 4 to 20 carbon atoms,
from 5 to 100% by weight, preferably from 5 to 97% by weight, of propene, and
from 0 to 50% by weight, preferably from 0 to 20% by weight, of ethene.

6. Primer for coating polyolefins, according to Claim 5, **characterized in that** α-olefins used having from 4 to 20 carbon atoms comprise 1-butene, 1-pentene, 1-hexene, 1-octene, 1-decene, 1-dodecene, 3-methyl-1-butene, a methylpentene, preferably 4-methyl-1-pentene, a methylhexene, or a methylheptene, alone or in a mixture.

7. Primer for coating polyolefins, according to any of the preceding claims, **characterized in that** the polymer type AB involves a graft copolymer having a polyolefin main chain and poly(meth)acrylate side chains.

8. Primer for coating polyolefins, according to any of the preceding claims, **characterized in that** monomers which lead to component B are fed into a mixture of a polymer of type A and of an initiator in a solvent, and are polymerized.

9. Process for priming polyolefin substrates, **characterized in that** a primer according to any of the preceding claims is applied in the form of solution and then the primer is dried.

10. Process according to Claim 9, **characterized in that** a second layer is applied to the primer layer.

11. Process according to Claim 10, **characterized in that** the second layer involves a coating, an adhesive, or a sealant.

12. Foil, molding, tube, or cable sheathing, **characterized in that** it has been coated according to any of Claims 9 to 11.

13. Process for priming polar substrates, **characterized in that** a primer according to any of Claims 1 to 8 is applied in the form of solution and then the primer is dried, and **in that** a second layer which is mainly composed of polyolefins is applied to the primer layer.

14. Process according to Claim 13, **characterized in that** the second layer involves an adhesive or a sealant.

15. Foil, molding, tube, or cable sheathing, **characterized in that** it has been coated according to either of Claims 13 and 14.

## Revendications

1. Apprêt pour le revêtement de polyoléfines, contenant une dispersion ou une solution filmogène, **caractérisé en ce que**
un type de polymère A, une polyoléfine ou un mélange de polyoléfines, est contenu,
un type de polymère B, un homo- et/ou copolymère de (méth)acrylate contenant des méthacrylates standards et/ou des acrylates standards, est contenu, et
un type de polymère AB, un copolymère greffé du type de polymère A et du type de polymère B, est contenu,
**en ce que** la dispersion ou la solution filmogène est exempte d'halogènes et est exempte d'acides, exempte d'acides signifiant au plus 70 mmoles de groupes acides/1 g de polymère et exempte d'halogènes signifiant au plus 10 mmoles d'atomes d'halogène/1 kg de polymère, et
**en ce que** la quantité du type de polymère A est comprise entre 5 % en poids et 60 % en poids,
**en ce que** la quantité du type de polymère B est comprise entre 5 % en poids et 70 % en poids,
**en ce que** la quantité du type de polymère AB est comprise entre 5 % en poids et 70 % en poids,
par rapport à la masse totale des types de polymères A, B et AB.

2. Apprêt pour le revêtement de polyoléfines selon la revendication 1, **caractérisé en ce que** le type de polymère B et le type de polymère AB comprennent des groupes silyle.

3. Apprêt pour le revêtement de polyoléfines selon la revendication 1 ou la revendication 2, **caractérisé en ce que** le rapport en masse entre la somme des types de polymères A, B et AB et la masse du solvant ou du mélange de solvants est compris entre 3:1 et 1:3, de préférence entre 2:1 et 1:2.

4. Apprêt pour le revêtement de polyoléfines selon la revendication 3, **caractérisé en ce que** le solvant ou le mélange de solvants ne contient pas de composés aromatiques.

5. Apprêt pour le revêtement de polyoléfines selon l'une quelconque des revendications 1 à 4, **caractérisé en ce que** le type de polymère A consiste en un polypropylène atactique, un poly-1-butène atactique et/ou un co- et/ou terpolymère de la composition de monomères suivante :
0 à 95 % en poids, de préférence 3 à 95 % en poids, d'une ou de plusieurs α-oléfines contenant 4 à 20 atomes de carbone,
5 à 100 % en poids, de préférence 5 à 97 % en poids, de propène, et
0 à 50 % en poids, de préférence 0 à 20 % en poids, d'éthène.

6. Apprêt pour le revêtement de polyoléfines selon la revendication 5, **caractérisé en ce que** du 1-butène, du 1-pentène, du 1-hexène, du 1-octène, du 1-décène, du 1-dodécène, du 3-méthyl-1-butène, un méthylpentène, de préférence le 4-méthyl-1-pentène, un méthylhexène ou un méthylheptène seuls ou en mélange sont utilisés en tant qu'α-oléfines contenant 4 à 20 atomes de carbone.

7. Apprêt pour le revêtement de polyoléfines selon l'une quelconque des revendications précédentes, **caractérisé en ce que** le type de polymère AB consiste en un copolymère greffé comprenant une chaîne principale polyoléfine et des chaînes latérales poly(méth)acrylate.

8. Apprêt pour le revêtement de polyoléfines selon l'une quelconque des revendications précédentes, **caractérisé en ce que** des monomères qui conduisent au composant B sont ajoutés à un mélange d'un polymère de type A et d'un initiateur dans un solvant, et polymérisés.

9. Procédé d'apprêtage de substrats en polyoléfine, **caractérisé en ce qu'**un apprêt selon l'une quelconque des revendications précédentes est appliqué sous la forme d'une solution, puis l'apprêt est séché.

10. Procédé selon la revendication 9, **caractérisé en ce qu'**une deuxième couche est appliquée sur la couche d'apprêt.

11. Procédé selon la revendication 10, **caractérisé en ce que** la deuxième couche consiste en un vernis, un adhésif ou un agent d'étanchéité.

12. Feuille, pièce moulée, tube ou gainage de câble, caractérisé(e) en ce qu'il ou elle a été revêtu(e) selon l'une quelconque des revendications 9 à 11.

13. Procédé d'apprêtage de substrats polaires, **caractérisé en ce qu'**un apprêt selon l'une quelconque des revendications 1 à 8 est appliqué sous la forme d'une solution, puis l'apprêt est séché, et **en ce qu'**une deuxième couche, qui est essentiellement constituée par des polyoléfines, est appliquée sur la couche d'apprêt.

14. Procédé selon la revendication 13, **caractérisé en ce que** la deuxième couche consiste en un adhésif ou en un agent d'étanchéité.

15. Feuille, pièce moulée, tube ou gainage de câble, caractérisé(e) en ce qu'il ou elle a été revêtu(e) selon l'une quelconque des revendications 13 à 14.
